## Europäisches Patentamt
## European Patent Office
## Office européen des brevets

(11) Veröffentlichungsnummer: **0 207 388**
**B1**

(12) # EUROPÄISCHE PATENTSCHRIFT

(45) Veröffentlichungstag der Patentschrift:
**14.03.90**

(21) Anmeldenummer: **86108392.1**

(22) Anmeldetag: **19.06.86**

(51) Int. Cl.⁴: **C08L 67/02,** C08L 69/00
// (C08L67/02, 69:00, 23:08,
51:04),(C08L69/00, 67:02, 23:08,
51:04)

(54) **Kälteschlagzähe thermoplastische Polyesterformmassen.**

(30) Priorität: **20.06.85 DE 3521957**

(43) Veröffentlichungstag der Anmeldung:
**07.01.87 Patentblatt 87/2**

(45) · Bekanntmachung des Hinweises auf die Patenterteilung:
**14.03.90 Patentblatt 90/11**

(84) Benannte Vertragsstaaten:
**BE DE FR GB IT NL**

(56) Entgegenhaltungen:
**EP-A- 0 106 027**
**EP-A- 0 111 851**

**Die Akte enthält technische Angaben, die nach dem Eingang der Anmeldung eingereicht wurden und die nicht in dieser Patentschrift enthalten sind.**

(73) Patentinhaber: **BASF Aktiengesellschaft,
Carl-Bosch-Strasse 38, D-6700 Ludwigshafen(DE)**

(72) Erfinder: **Hub, Hans-Henning, Dr., Herrnshelmer
Hauptstrasse 127a, D-6520 Worms 24(DE)**
Erfinder: **Simon, Georg Nikolaus, Dr., Untere Hart 10,
D-6703 Limburgerhof(DE)**
Erfinder: **Heinz, Gerhard, Dr., Im Vogelsang 2,
D-6719 Weisenheim(DE)**
Erfinder: **Ziegler, Walter, Dr., Starenweg 15,
D-6803 Edingen-Neckarhausen(DE)**
Erfinder: **Sadlowski, Jürgen, Dr.,
Bodelschwinghstrasse 29 b,
D-4400 Münster-Hiltrup(DE)**

## Beschreibung

Gegenstand der Erfindung sind kälteschlagzähe thermoplastische Polyesterformmassen, die neben einer guten Kälteschlagzähigkeit eine sehr gute Lochkerbschlagzähigkeit bei tiefen Temperaturen aufweisen und sich durch eine hohe Wärmeformbeständigkeit auszeichnen.

Polymermischungen aus thermoplastischen Polyestern und Polycarbonat sind aus der DE-A 2 417 002 bekannt. Sie weisen gegenüber den reinen Polyestern ein verbessertes mechanisches Niveau auf. Es wurde auch bereits versucht, die Schlagzähigkeit von Polyester/Polycarbonatmischungen durch Zusatz von Elastomeren zu verbessern. Geeignete Modifizierungsmittel sind entsprechend DE-PS 2 343 609 Pfropfcopolymere auf Basis Polybutadien in der EP-A 20 605 werden hierfür auch Polyacrylatpfropfkautschuke empfohlen. In der EP-A 20 737 werden Mischungen beschrieben, in denen Polyester/Polycarbonatgemisch mit Styrol-Dien-Blockcopolymeren modifiziert sind. Aus der DE-OS 2 622 876 sind auch Mischungen bekannt, die aus Polycarbonat und Ethylencopolymeren oder aus Polyester und einem Ethylencopolymeren bestehen. Der Zusatz des Copolymeren erfolgt zur Verbesserung der Zähigkeit. Entsprechend der DE-OS 3 234 174 wurden auch schon Mischungen aus Polycarbonaten und Polyestern, Ethylencopolymere mit Carboxylgruppen zugesetzt.

Alle bekannten Mischungen zeigen jedoch bei tiefen Temperaturen unbefriedigende Kerbschlagzähigkeiten, insbesondere wurde die Kombination von Schlagzähigkeit bei tiefen Temperaturen und zugleich hohe Wärmeformbeständigkeit nicht erreicht.

Es war deshalb die technische Aufgabe gestellt, schlagzähe thermoplastische Polyesterformmassen zur Verfügung zu stellen, die sich durch gute mechanische Eigenschaften auszeichnen und in Kombination eine gute Kerbschlagzähigkeit bei tiefen Temperaturen mit einer guten Lochkerbschlagzähigkeit und Wärmeformbeständigkeit aufweisen.

Diese Aufgabe wird gelöst durch kälteschlagzähe, thermoplastische Polyesterformmassen, enthaltend

(A) 20 bis 79 Gew.-Teilen mindestens eines aliphatischen Polyesters einer aromatischen Dicarbonsäure mit einer relativen Viskosität von 1,2 bis 1,8

(B) 20 bis 79 Gew.-Teilen mindestens eines aromatischen Polycarbonats mit einer relativen Viskosität von 1,2 bis 1,5

(C) 1 bis 40 Gew.-Teilen eines elastomeren Gemisches bestehend aus

1. 5 bis 95 Gew.-% eines Ethylencopolymeren aufgebaut aus

    a) 40 bis 99 Gew.-% Ethylen und

    b) 1 bis 60 Gew.-% mindestens eines Carboxylgruppen und/oder Carboxylgruppenderivate enthaltenden Comonomeren und

2. 95 bis 5 Gew.-% eines durch Emulsionspolymerisation hergestellten kautschukelastischen Pfropfpolymerisats, aufgebaut aus

    a) 70 bis 95 Gew.-% einer im wesentlichen vernetzten Pfropfgrundlage mit einer Glastemperatur $T_g$ von kleiner −20°C, die zu mindestens 80 Gew.-% aus Butadienbausteinen besteht, und

    b) 5 bis 30 Gew.-% einer Pfropfhülle aus mindestens einem Polymeren mit einer Glastemperatur $T_g$ von größer 20°C,

wobei der Pfropfkautschuk (C2) mindestens 80% Teilchen mit einem Durchmesser von 0,05 bis 0,2 μm enthält und

wobei die Summe der Komponenten (A) bis (C) und 1. a) und b) und 2. a) und b) jeweils 100 Gew.-Teile bzw. Gew.-% beträgt und

(D) gegebenenfalls übliche Zusatzstoffe in wirksamen Mengen.

Die neuen schlagzähen thermoplastischen Polyesterformmassen zeichnen sich durch ein gutes mechanisches Niveau zusätzlich gute Kerbschlagzähigkeiten bei tiefen Temperaturen bei guten Lochkerbschlagzähigkeiten in Kombination mit hoher Wärmeformbeständigkeit aus.

Die entsprechend der Erfindung verwendeten Polyester (Komponente A) sind an sich bekannt. Sie besitzen Ketteneinheiten, die einen gegebenenfalls substituierten aromatischen Ring in der Polymerkette enthalten. Beispiele für derartige Substituenten des aromatischen Rings sind Halogene, wie Chlor oder Brom, $C_1$- bis $C_4$-Alkylgruppen, wie Methyl-, Ethyl-, Propyl- oder Butylgruppen. Geeignete Polyester werden beispielsweise hergestellt durch Reaktion der entsprechenden aromatischen Dicarbonsäuren, deren Ester oder andere esterbildender Derivate mit Dihydroxiverbindungen in an sich bekannter Weise. Geeignete Dihydroxiverbindungen sind beispielsweise Glykole mit 2 bis 6 Kohlenstoffatomen, insbesondere Ethylenglykol, 1,4-Butandiol, 1,4-Butendiol, 1,6-Hexandiol, ferner 1,4-Hexandiol, 1,4-Cyclohexandiol, 1,4-Bis-(hydroximethyl)-cyclohexan, Bisphenol A, Neopentylglykol oder deren Mischungen.

Geeignete aromatische Dicarbonsäuren sind beispielsweise Naphthalindicarbonsäure, Terephthalsäure, Isophthalsäure, deren esterbildende Derivate und Mischungen davon.

In den Polyestern können die aromatischen Dicarbonsäuren teilweise z.B. bis zu 10 Mol.-% durch andere Dicarbonsäuren ersetzt sein. Als Modifizierungsmittel kommen aliphatische oder cycloaliphatische Dicarbonsäuren, wie Adipinsäure, Azelainsäure, Sebazinsäure, Dodecandisäure oder Cyclohexandicarbonsäure in Frage.

Bevorzugte Polyester sind Polyalkylenterephthalate, die sich von Alkandiolen mit 2 bis 6 Kohlenstoffatomen ableiten. Besonders bevorzugt sind Polyethylenterephthalat und insbesondere Polybutylenterephthalat. Die Polyester (Komponente A) sind charakterisiert durch eine relative Viskosität von 1,2 bis 1,8, gemessen in einer 0,5 gew.-%igen Lösung in einem Phenol-/o-Dichlorbenzolgemisch von 3:2 Gewichtsteilen bei 25°C.

Die erfindungsgemäß verwendeten aromatischen Polycarbonate (Komponente B) sind an sich bekannt. Sie sind z.B. entsprechend dem Verfahren nach der deutschen Patentschrift 1 300 266 durch Grenzflächenpolykondensation oder gemäß dem Verfahren der deutschen Offenlegungsschrift 1 495 730 durch Umesterung von Diphenylcarbonat mit Bisphenol A erhältlich. Anstelle von Bisphenol A können z.B. bis zu 30 Mol.-% andere aromatische Bis-hydroxyverbindungen verwendet werden, insbesondere Bis-(4-hydroxyphenyl)-pentan-2,2, 2,6-Dihydroxynaphthalin, Bis-(4-hydroxyphenyl)-sulfon, Bis-(4-hydroxyphenyl)-ether, Bis-(4-hydroxyphenyl)-sulfid, Bis-(4-hydroxyphenyl)-methan, Bis-(4-hydroxyphenyl)-ethan-1,1 oder 4,4'-Dihydroxydiphenyl.

Für den erfindungsgemäßen Zweck geeignete Polycarbonate haben eine relative Viskosität (gemessen bei 25°C an einer 0,5 gew.-%igen Methylenchloridlösung) von 1,2 bis 1,5, vorzugsweise von 1,28 bis 1,40.

Als Komponente C enthalten die erfindungsgemäßen Formmassen 1 bis 40 Gew.-Teile, insbesondere 5 bis 30 Gew.-Teile eines Gemisches aus 2 Elastomeren. Das Elastomerengemisch besteht aus

1. 5 bis 95 Gew.-%, insbesondere 20 bis 80 Gew.-% eines Ethylencopolymeren aufgebaut aus
a) 40 bis 99 Gew.-%, vorzugsweise 60 bis 95 Gew.-% Ethylen und
b) 1 bis 60 Gew.-%, vorzugsweise 5 bis 40 Gew.-% mindestens eines Carboxylgruppen und/oder Carboxylgruppenderivate enthaltenden Comonomeren.

Als Comonomere 1b eignen sich beispielsweise Acrylsäure, Methacrylsäure, Fumarsäure, Maleinsäure, Maleinsäureanhydrid oder Derivate dieser Säuren, deren $C_1$- bis $C_8$-Alkylester, deren Amide, wobei das Stickstoffatom der Amidgruppe $C_1$- bis $C_8$-Alkylreste haben kann, Salze dieser Säuren, insbesondere Alkalisalze, ferner Acrylnitril.

Bevorzugte Ethylencopolymere haben eine Glasübergangstemperatur unterhalb von 0°C, insbesondere unterhalb –20°C. Sie sind im allgemeinen hochmolekular und haben einen Schmelzindex MFI 190/2,16 (DIN 53 735) von 1 bis 80. Die Herstellung der Ethylencopolymeren erfolgt in an sich bekannter Weise durch Polymerisation der Komponenten bei erhöhter Temperatur unter hohem Ethylendruck.

Das Elastomerengemisch (Komponente C) besteht zusätzlich aus

2. 5 bis 95 Gew.-%, insbesondere 20 bis 80 Gew.-% eines durch Emulsionspolymerisation hergestellten kautschukelastischen Pfropfpolymerisats aufgebaut aus
a) 70 bis 95 Gew.-% einer im wesentlichen vernetzten Pfropfgrundlage mit einer Glastemperatur $T_g$ kleiner –20°C, die zu mindestens 80 Gew.-% aus Butadienbausteinen besteht, und
b) 5 bis 30 Gew.-% einer Pfropfhülle aus mindestens einem Polymerisat mit einer Glastemperatur $T_g$ von größer 20°C.

Für die Zwecke der Erfindung sind prinzipiell alle Pfropfpolymerisate der vorstehenden Art geeignet, sofern sie kautschukelastische Eigenschaften besitzen und sofern sie eine Glastemperatur $T_g$ von unterhalb –20°C, insbesondere zwischen –150 und –20°C haben.

Beispiele für solche Pfropfpolymerisate sind Systeme auf Basis von Polybutadien, wie sie beispielsweise beschrieben werden in der DE-PS 1 252 902.

Die Pfropfpolymerisate werden nach bekannten Methoden hergestellt, z.B. wie sie in Houben-Weyl-Methoden der Org. Chemie, Band XIV/1, 1961, Seiten 396 bis 399, insbesondere 397 beschrieben werden.

Zunächst wird ein Polybutadienlatex hergestellt, der den weichen Kern des Pfropfkautschuks ergibt. Dieser weiche Kern besteht zu mindestens 80 Gew.% aus Polybutadieneinheiten. Der Gelgehalt des Kerns liegt vorteilhaft über 80 Gew.-%. Neben Butadien können auch bis zu 20 Gew.-% andere Monomere in die Pfropfgrundlage eingebaut werden. Beispiele hierfür sind Styrol, Acrylnitril, Ester der Acryl- oder Methacrylsäure mit $C_1$- bis $C_8$-Alkanolen, ferner Diene wie Isopren, Chloropren oder andere mit Butadien copolymerisierbare Vinylverbindungen.

Auf diese Pfropfgrundlage erfolgt das Aufpfropfen einer harten Pfropfhülle aus mindestens einem Polymerisat einer Glastemperatur von größer 20°C. Gegebenenfalls können mehrere Pfropfhüllen aufgepfropft werden. Als Monomere für den Aufbau der Pfropfhülle eignen sich vorzugsweise Mischungen von Styrol/Acrylnitril im Gewichtsverhältnis 3,5:0,5 bis 2,5:1,5, ferner Methyl(meth)acrylat und Mischungen derselben. In der Pfropfhülle können auch geringe Mengen, z.B. bis zu 10 Gew.-%, bezogen auf die Summe der Pfropfmonomeren, andere Monomeren eingebaut werden, wie Acrylsäureester von $C_1$- bis $C_{10}$-Alkanolen, Methacrylsäureester von $C_2$- bis zu $C_{10}$-Alkanolen, Vinylderivate mit reaktiven Gruppen wie Allyl(meth)acrylat, Maleinsäureanhydrid oder Itakonsäure.

Die Teilchen des Pfropfpolymerisats haben vorteilhaft einen Durchmesser von 0,05 bis 0,6 µm, wobei mindestens 80% der Teilchenzahl einen Durchmesser von 0,05 bis 0,2 µm aufweist.

Die Formmassen entsprechend der Erfindung enthalten zusätzlich gegebenenfalls Zusatzstoffe in wirksamen Mengen. Übliche Zusatzstoffe sind beispielsweise Stabilisatoren und Oxidationsverzögerer, Mittel gegen Wärmezersetzung und Zersetzung durch ultraviolettes Licht, Gleit- und Entformungsmittel, Färbemittel, wie Farbstoffe und Pigmente, faser- und pulverförmige Füll- und Verstärkungsmittel, Keimbildungsmittel, Weichmacher. Solche Zusatzstoffe werden in den üblichen wirksamen Mengen eingesetzt.

Die Stabilisatoren können den Massen in jedem Stadium der Herstellung der thermoplastischen Massen zugesetzt werden. Vorzugsweise werden die Stabilisatoren zu einem frühen Zeitpunkt zugesetzt, um zu verhindern, daß die Zersetzung bereits beginnt, bevor die Masse geschützt werden kann. Solche Stabilisatoren müssen mit der Masse verträglich sein. ·

Zu den Oxidationsverzögerern und Wärbestabilisatoren, die den thermoplastischen Massen gemäß der Erfindung zugesetzt werden können, gehören diejenigen, die allgemein zu Polymeren zugesetzt werden wie Halogenide von Metallen der Gruppe I des periodischen Systems, z.B. Natrium-, Kalium-, Lithiumhalogenide in Verbindung mit Kupfer-(I)-halogeniden, z.B. Chlorid, Bromid oder Jodid. Ferner sind geeignete Stabilisatoren, sterisch gehinderte Phenole, Hydrochinone, verschiedene substituierte Vertreter dieser Gruppe und Kombinationen derselben in Konzentrationen bis 1 Gew.-%, bezogen auf das Gewicht der Mischung.

Als UV-Stabilisatoren kann man ebenfalls diejenigen, die allgemein zu Polymeren zugesetzt werden, in Mengen bis zu 2,0 Gew.-% auf die Mischung verwenden. Beispiele für UV-Stabilisatoren sind verschiedene substituierte Resorcine, Salicylate, Benzotriazole, Benzophenone und dergleichen.

Geeignete Gleit- und Entformungsmittel, die z.B. in Mengen bis zu 1 Gew.-% der thermoplastischen Masse zugesetzt werden, sind Stearinsäuren, Stearylalkohol, Stearinsäureester und -amide. Ferner können zugesetzt werden organische Farbstoffe, wie Nigrosin, Pigmente, z.B. Titandioxid, Cadmiumsulfid, Cadmiumsulfid-selenid, Phthalocyanine, Ultramarinblau oder Ruß. Darüber hinaus können die erfindungsgemäßen Formmassen faser- oder pulverförmige Füllstoffe und Verstärkungsmittel, wie Kohlenstoffasern, Glasfasern, amorphe Kieselsäure, Asbest, Calciumsilicat, Calciummethasilicat, Aluminiumsilicat, Magnesiumcarbonat, Kaolin, Kreide, gepulverten Quarz, Glimmer, Feldspat in Mengen bis zu 50 Gew.-%, bezogen auf die Formmasse, enthalten. Ferner können Keimbildungsmittel, wie Talkum, Calciumfluorid, Natriumphenylphosphinat, Aluminiumoxid oder feinteiliges Polytetrafluorethylen in Mengen z.B. bis zu 5 Gew.-% bezogen auf die Masse angewandt werden. Weichmacher, wie Phthalsäuredioctylester, Phthalsäuredibenzylester, Phthalsäurebutylbenzylester, Kohlenwasserstofföle, N-n-Butylbenzolsulfonamid, o- und p-Toluolethylsulfonamid werden vorteilhaft in Mengen bis etwa 20 Gew.-%, bezogen auf die Formmasse, zugesetzt. Färbemittel, wie Farbstoffe und Pigmente können in Mengen bis zu etwa 5 Gew.-%, bezogen auf die Formmasse, zugesetzt werden.

Die Formmassen gemäß der Erfindung werden z.B. hergestellt, in dem man Polyester und Polycarbonat sowie Ethylencopolymeres und ausgefällten Pfropfkautschuk mischt und in einer üblichen Mischvorrichtung, wie Schneckenextruder, Brabender-Mühle oder Banbury-Mühle die Elastomeren in das schmelzflüssige Gemisch aus Polyester und Polycarbonat einmischt. Nach einer bevorzugten Arbeitsweise werden Polyester, Polycarbonat und Ethylencopolymere in schmelzflüssigem Zustand in einem Extruder gemischt und dann durch im Verlauf des Extruders angeordnete Zugabeöffnungen die Pfropfkautschukdispersion zugeben, mit der Polymerisatschmelze innig vermischt und über eine Entgasungsöffnung Wasser und flüchtige Anteile entfernt. Die Masse wird anschließend ausgepreßt, gekühlt und zerkleinert. Die Mischtemperaturen betragen in der Regel 240 bis 270°C. Nach einer besonders bevorzugten Arbeitsweise stellt man zunächst ein Konzentrat her aus Polyester und/oder Polycarbonat, das 20 bis 70 Gew.-% Pfropfkautschuk enthält. Der Pfropfkautschuk wird wie oben ausgeführt, vorteilhaft als Dispersion in die Polyester und/oder Polycarbonatschmelze zugegeben. Die Masse wird dann zu einem Masterbatch verfestigt und zerkleinert. Anschließend werden Polyester, Polycarbonat und Ethylencopolymeres mit dem Masterbatch im Extruder im schmelzflüssigen Zustand innig vermischt, in Stränge gepreßt, gekühlt und zerkleinert.

Die erfindungsgemäßen Formmassen eignen sich zur Herstellung von hochbeanspruchbaren thermostabilen schlagzähen Formteilen für technische Zwecke aller Art nach dem Spritzguß- oder Extrusionsverfahren.

Der Gegenstand der Erfindung sei in folgenden Beispielen veranschaulicht.

Beispiel 1 bis 4

Polybutylenterephthalat (PBT) wurde mit einem Polycarbonat (PC) und den Schlagzähmodifiern intensiv gemischt, in einem Zweischneckenextruder vom Typ ZSK 30 der Firma Werner und Pfleiderer, bei 250° aufgeschmolzen, homogenisiert und in ein Wasserbad extrudiert. Nach Granulierung und Trocknung wurden die Mischungen auf einer Spritzgußmaschine zu Prüfkörpern geformt und diese ohne weitere Nachbehandlung geprüft.

Das eingesetzte Polybutylenterephthalat hatte eine relative Viskosität von 1,60, gemessen in einer 0,5%igen Lösung in Phenol-o-Dichlorbenzol 1:1 bei 25°C.

Das verwendete Polycarbonat auf Bisphenol A-Basis hatte eine relative Viskosität von 1,36 gemessen in einer 0,5%igen Lösung in Methylenchlorid bei 25°C.

4

In den Vergleichsbeispielen 1 und 3 wurde ein Acrylatpfropfkautschuk gemäß DE-PS 2 444 584 Typ A eingesetzt. Im Vergleichsbeispiel 2 wurde ein Polybutadienkautschuk gemäß DE-PS 2 343 609 verwendet.

Die den erfindungsgemäßen Beispielen eingesetzten Copolymeren sind durch den Schmelzindex, gemessen bei 190° und 2,16 kg Gewicht folgendermaßen charakterisiert:

## Tabelle 1

| Beispiel Nr. | Copolymer Zusammensetzung | MFI 190°/2,16 (G/10 min) |
|---|---|---|
| 3, 5, 7 | E-nBA-AS (64-31-5) | 17 |
| 6, 9, 10, 12 | E-nBA-AS (66-30-4) | 15 |
| 11 | E-AS (92-8) | 7 |
| 8 | E-nBA-MSA (62-35-3) (Säurezahl 50) | 35 |

```
E   = Ethylen
nBA = n-Butylacrylat
MSA = Maleinsäureanhydrid
AS  = Acrylsäure
```

Die Zusammensetzung der erfindungsgemäßen Copolymeren ist in der Tabelle 1 als Gewichtsprozent der entsprechenden Monomeren angegeben. Der Gehalt an Maleinsäureanhydrid in den Copolymeren des Beispiels 8 ist zusätzlich charakterisiert durch die Säurezahl (SZ), angegeben in mg KOH, die zur Neutralisation von 1 g Copolymer erforderlich sind.

Aus Tabelle 2 ist ersichtlich, daß eine gewisse Zähigkeit bei tiefen Temperaturen durch Acrylatkautschuk erreichbar ist (Vergl. Versuch 1). Die Zähigkeit wird durch die Kombination von Acrylaten und Ethylencopolymeren nur geringfügig verbessert (Vergl. Versuch 3). Polybutadienkautschuke heben die Kerbschlagzähigkeit, ohne jedoch gleichzeitig die Lochkerbschlagzähigkeit zu verbessern (Vergl. Versuch 2 und 4). Die Copolymeren allein geben auch unbefriedigende Werte (Vergl. Vers. 5).

Die erfindungsgemäßen Beispiele 6 bis 12 beweisen, daß durch den Zusatz der Butadienkautschuke und der Ethylencopolymeren gemäß der Erfindung eine hohe Wärmeformbeständigkeit und eine gute Kerbschlagzähigkeit bei tiefen Temperaturen mit einer sehr guten Lochkerbschlagzähigkeit bei tiefen Temperaturen verbunden ist.

## Tabelle 2

| Beispiel Nr. | | Zusammensetzung | | | | Kerbschlagzähigkeit $a_K$ [kJ/m²] | | Lochkerbschlag-zähigkeit $a_{LK}$ [kJ/m²] | | Vicat-Zahl |
|---|---|---|---|---|---|---|---|---|---|---|
| | | PBT % | PC % | % | Modifier Typ | -20° | -40° | -20° | -40° | °C |
| 1 (Vergl.) | | 40 | 50 | 10 | Ayrylat | 6,4 | 4,2 | 96 | 79 | 80 |
| 2 | " | 40 | 50 | 10 | Polybutadien I | 30 | 10 | 69 | 64 | 123 |
| 3 | " | 40 | 50 | 5 | Acrylat | | | | | |
| | | | | 5 | E-BA-AS | 10 | 5 | 89 | 64 | 120 |
| 4 | " | 40 | 50 | 10 | Polybutadien II | 6,4 | 5,8 | 77 | 52 | 75 |
| 5 | " | 40 | 50 | 10 | E-nBA-AS | 6,0 | 6,0 | 83 | 52 | 122 |
| 6 | erfindungs-gemäß | 40 | 50 | 5 | Polybutadien I | | | | | |
| | | | | 5 | E-nBA-AS | 15,8 | 8,8 | 82 | 78 | 118 |
| 7 | | 40 | 50 | 5 | Polybutadien II | | | | | |
| | | | | 5 | E-nBA-AS | 14,1 | 7,4 | 112 | 110 | 118 |
| 8 | | 50 | 40 | 5 | Polybutadien II | | | | | |
| | | | | 5 | E-nBA-MSA | 6,7 | 4,6 | 108 | 65 | 128 |
| 9 | | 45 | 45 | 5 | Polybutadien II | | | | | |
| | | | | 5 | E-nBA-AS | 11 | 6,4 | 103 | 93 | 121 |
| 10 | | 40 | 45 | 10 | Polybutadien II | | | | | |
| | | | | 5 | E-nBA-AS | 39,2 | 10,7 | 93 | 86 | 118 |
| 11 | | 40 | 48 | 10 | Polybutadien II | | | | | |
| | | | | 2 | E-AS | 14,3 | 6,8 | 99 | 79 | 121 |
| 12 | | 40 | 50 | 5 | Polybutadien II | | | | | |
| | | | | 5 | E-nBA-AS | 12 | 7 | 83 | 76 | 122 |

EP 0 207 388 B1

Anmerkung zu Tabelle 2:
Kerbschlagzähigkeit bestimmt nach DIN 53 453
Lochkerbschlagzähigkeit bestimmt nach DIN 53 753

Polybutadien I

Pfropfpolymerisat auf Basis Polybutadien mit 10% Styrol und 20% Methylmethacrylat Pfropfhülle (Paraloid KM653 der Fa. Rohm & Haas)
Einmischung: Sprühgetrockneter Kautschuk in die Schmelze eingebracht.

Polybutadien II

Pfropfpolymerisat auf Basis Polybutadien mit 20% einer Pfropfhülle aus Styrol-Acrylnitril (3:1).
Gelgehalt: 80%
Teilchengröße: 0,1–0,3 μm
Einmischung: Die ca. 50% Feststoff enthaltende wäßrige Kautschukdispersion wurde in PBT-Schmelze eingearbeitet. Die so erhaltene Mischung (50% Kautschuk-Gehalt) wurde als Granulat dem PC, PBT- und Ethylencopolymer-Granulaten zugemischt und extrudiert.

**Patentansprüche**

1. Kälteschlagzähe thermoplastische Polyesterformmassen, enthaltend
(A) 20 bis 79 Gew.-Teilen mindestens eines aliphatischen Polyesters einer aromatischen Dicarbonsäure mit einer relativen Viskosität von 1,2 bis 1,8
(B) 20 bis 79 Gew.-Teilen mindestens eines aromatischen Polycarbonats mit einer relativen Viskosität von 1,2 bis 1,5
(C) 1 bis 40 Gew.-Teilen eines Elastomerengemischs, bestehend aus
   1. 5 bis 95 Gew.% eines Ethylencopolymeren aufgebaut aus
      a) 40 bis 99 Gew.% Ethylen und
      b) 1 bis 60 Gew.% mindestens eines Carboxylgruppen und/oder Carboxylgruppenderivate enthaltenden Comonomeren und
   2. 5 bis 95 Gew.% eines durch Emulsionspolymerisation hergestellen kautschukelastischen Pfropfpolymerisats aufgebaut aus
      a) 70 bis 95 Gew.% einer im wesentlichen vernetzten Pfropfgrundlage mit einer Glastemperatur Tg von kleiner –20°C die zu mindestens 80 Gew.% aus Butadienbausteinen besteht, und
      b) 5 bis 30 Gew.% einer Pfropfhülle aus mindestens einem Polymeren mit einer Glastemperatur Tg von größer 20°C,
   wobei der Pfropfkautschuk (C2) mindestens 80% Teilchen mit einem Durchmesser von 0,05 bis 0,2 μm enthält und
wobei die Summe der Komponenten (A) bis (C) sich auf 100 Gew.-Teile ergänzen und die Komponenten 1a) und b) sowie 2a) und b) sich jeweils auf 100 Gew.% ergänzen und
D) gegebenenfalls übliche Zusatzstoffe in wirksamen Mengen.
2. Schlagzähe thermoplastische Formmassen nach Anspruch 1, dadurch gekennzeichnet, daß die Komponente (A) ein C2–C4-Polyalkylenterephthalat ist.
3. Schlagzähe thermoplastische Formmassen nach den Ansprüchen 1 oder 2, dadurch gekennzeichnet, daß die Komponente (B) ein Polycarbonat auf Basis von Bisphenol A ist.
4. Schlagzähe thermoplastische Formmassen nach einem der Ansprüche 1 bis 3, dadurch gekennzeichnet, daß die Komponente (C1) einen Schmelzindex MFI 190/2,16 von 1 bis 80, gemessen nach DIN 53 735, und eine Glasübergangstemperatur unterhalb von 0°C besitzt.
5. Schlagzähe thermoplastische Formmassen nach einem der Ansprüche 1 bis 4, dadurch gekennzeichnet, daß das Comonomere (b) der Komponente C1) Acrylsäure, Methacrylsäure, Fumarsäure, Maleinsäure, Maleinsäureanhydrid, ein C1–C8-Alkylester, ein Amid oder ein C1–C8-Alkyl oder Dialkylamid oder ein Salz dieser Säuren oder Acrylnitril ist.
6. Schlagzähe thermoplastische Formmassen nach einem der Ansprüche 1 bis 5, dadurch gekennzeichnet, daß sie durch Mischen einer Schmelze aus Polyester (Komponente A) und Polycarbonat (Komponente B) sowie einem Ethylencopolymerisat (Komponente C1) und einer wäßrigen Dispersion des Pfropfpolymerisats (Komponente C2) unter gleichzeitiger Entfernung des verdampfenden Wassers hergestellt worden sind.

**Claims**

1. A thermoplastic polyester molding material which has low-temperature impact strength and contains
(A) from 20 to 79 parts by weight of one or more aliphatic polyesters of an aromatic dicarboxylic acid having a relative viscosity of from 1.2 to 1.8,

(B) from 20 to 79 parts by weight of one or more aromatic polycarbonates having a relative viscosity of from 1.2 to 1.5,

(C) from 1 to 40 parts by weight of an elastomer blend consisting of

1. from 5 to 95% by weight of an ethylene copolymer composed of

    a) from 40 to 99% by weight of ethylene and

    b) from 1 to 60% by weight of one or more comonomers containing carboxyl groups and/or derivatives of carboxyl groups, and

2. from 5 to 95% by weight of an elastomeric graft polymer which is prepared by emulsion polymerization and composed of

    a) from 70 to 95% by weight of a substantially crosslinked grafting base having a glass transition temperature Tg below −20°C and consisting of not less than 80% by weight of butadiene, and

    b) from 5 to 30% by weight of a graft shell consisting of one or more polymers having a glass transition temperature Tg higher than 20°C,

    wherein, in the graft rubber C2), not less than 80% of the particles have a diameter of from 0.05 to 0.2 µm,

the amounts of components (A) to (C) summing to 100 parts by weight, and the amounts of components 1a) and 1b) and 2a) and b) each summing to 100% by weight, and

(D) if required, conventional additives in effective amounts.

2. An impact-resistant thermoplastic molding material as claimed in claim 1, wherein the component (A) is a $C_2$-$C_4$-polyalkylene terephthalate.

3. An impact-resistant thermoplastic molding material as claimed in claim 1 or 2, wherein the component (B) is a polycarbonate based on bisphenol A.

4. An impact-resistant thermoplastic molding material as claimed in any one of claims 1 to 3, wherein the component (C1) has a melt flow index MFI 190/2.16 of from 1 to 80, measured according to DIN 55 735, and a glass transition temperature below 0°C.

5. An impact-resistant thermoplastic molding material as claimed in any one of claims 1 to 4, wherein the comonomer (b) of component C1) is acrylic acid, methacrylic acid, fumaric acid, maleic acid, maleic anhydride, a $C_1$-$C_8$-alkyl ester, an amide or a $C_1$-$C_8$-alkyl- or dialkylamide or a salt of one of these acids, or acrylonitrile.

6. An impact-resistant thermoplastic molding material as claimed in any one of claims 1 to 5, which is prepared by mixing a melt of the polyester (component A) and the polycarbonate (component B) and an ethylene copolymer (component C1) and an aqueous dispersion of the graft polymer (component C2) with simultaneous removal of the water which vaporizes.

## Revendications

1. Masses à mouler thermoplastiques de polyester résistantes au choc à froid, contenant

(A) de 20 à 79 parties en poids d'au moins un polyester aliphatique d'un acide dicarboxylique aromatique, ayant une viscosité relative de 1,2 à 1,8

(B) de 20 à 79 parties en poids d'au moins un polycarbonate aromatique, ayant une viscosité relative de 1,2 à 1,5,

(C) de 1 à 40 parties en poids d'un mélange d'élastomères se composant de

1. 5 à 95% en poids d'un copolymère d'éthylène constitué par

    a) 40 à 99% en poids d'éthylène et

    b) 1 à 60% en poids d'au moins un comonomère contenant des groupements carboxyle et/ou des dérivés de groupement carboxyle et

2. 5 à 95% en poids d'un polymère greffé ayant l'élasticité du caoutchouc, préparé par polymérisation en émulsion et constitué par

    a) 70 à 95% en poids d'une base de greffage essentiellement réticulée, ayant une température de transition vitreuse Tg de moins de −20°C et se composant pour 80% en poids au moins d'éléments structuraux butadiène, et

    b) 5 à 30% en poids d'une enveloppe de greffage faite d'au moins un polymère ayant une température de transition vitreuse Tg de plus de 20°C,

le caoutchouc greffé C2) contenant au moins 80% de particules d'un diamètre de 0,05 à 0,2 µm,

la somme des composants (A) à (C) s'élevant au total à 100 parties en poids et chacun des pourcentages totaux des composants 1a) et b) ainsi que 2a) et b) s'élevant à 100% en poids, et

(D) éventuellement des additifs usuels dans des quantités valables.

2. Masses à mouler thermoplastiques résistantes au choc à froid selon la revendication 1, caractérisées en ce que le composant (A) est un poly(téréphtalate d'alkylène en $C_2$-$C_4$).

3. Masses à mouler thermoplastiques résistantes au choc à froid selon la revendication 1 ou 2, caractérisées en ce que le composant (B) est un polycarbonate à base de bisphénol A.

4. Masses à mouler thermoplastiques résistantes au choc à froid selon l'une quelconque des revendications 1 à 3, caractérisées en ce que le composant (C1) a un indice de fusion MFI 190/2,16 de 1 à 80, mesuré selon la DIN 53 735, et une température de transition vitreuse au-dessous de 0°C.

5. Masses à mouler thermoplastiques résistantes au choc à froid selon l'une quelconque des revendications 1 à 4, caractérisées en ce que le comonomère (b) du composant C1) est l'acide acrylique, l'acide méthacrylique, l'acide fumarique, l'acide maléique, l'anhydride maléique, un ester alkylique en $C_1$–$C_8$, un amide, un mono- ou di-$C_1$–$C_8$-alkylamide ou un sel de ces acides ou l'acrylonitrile.

6. Masses à mouler thermoplastiques résistantes au choc à froid selon l'une quelconque des revendications 1 à 5, caractérisées en ce qu'elles ont été préparées par mélange d'une masse fondue de polyester (composant A) et de polycarbonate (composant B), ainsi que d'un copolymère d'éthylène (composant C1) et d'une dispersion aqueuse du polymère greffé (composant C2), avec élimination simultanée de l'eau qui se vaporise.